# EUROPÄISCHE PATENTSCHRIFT

(11) **EP 0 600 824 B1**
(45) Veröffentlichungstag und Bekanntmachung des Hinweises auf die Patenterteilung: **16.10.1996**
(21) Anmeldenummer: 93810551.7
(22) Anmeldetag: 04.08.1993
(51) Int. Cl.: B23P 15/28, B28D 1/04, E21B 10/48

(54) **Verfahren zur Herstellung von Diamantbohrkronen**
Method for manufacturing a diamond core bit
Procédé de fabrication d'un couronne de forage diamantée

(30) Priorität: 07.10.1992 DE 4233770
(43) Veröffentlichungstag der Anmeldung: 08.06.1994
(73) Patentinhaber: HILTI Aktiengesellschaft, 9494 Schaan (LI)
(72) Erfinder: Bogner, Werner, D-8000 München (DE)
(74) Vertreter: Wildi, Roland

(56) Entgegenhaltungen:
- EP-A- 0 336 698
- EP-A- 0 358 526
- DE-B- 1 137 404
- GB-A- 2 029 389
- US-A- 4 202 420
- PATENT ABSTRACTS OF JAPAN vol. 8, no. 216 (M-329)3. Oktober 1984 & JP-A-59 102 533 (MITSUBISHI) 13. Juni 1984

## Beschreibung

Die Erfindung betrifft ein Verfahren zur Herstellung diamantbestückter Bohrkronen für zylindrische Diamantbohrwerkzeuge.

Diamantbestückte Bohrkronen werden im allgemeinen beim Nassbohren bis etwa 42 mm Durchmesser als einteilige Schneidringausführung und über etwa 42 mm Durchmesser sowie auch beim Trockenbohren in Ringsegmentausführung hergestellt.

Die Ringsegmente der Ringsegmentausführung werden bis anhin einzeln vorgefertigt und zur Bildung von Bohrkronen in einem zusätzlichen Arbeitsgang auf einen Hohlzylinderträger aufgesetzt. Dieses Verfahren erfordert eine hohe Genauigkeit, es ist kompliziert und kostspielig. Dabei ist zu beachten, dass die Qualität diamantbestückter Bohrkronen von der Form und Grösse der Segmente, vom Verbindungsquerschnitt zwischen Segment und Hohlzylinderträger sowie auch von der Genauigkeit und Festigkeit der Verbindung bestimmt wird. Das Herstellen der gekrümmten Segmente ist zudem mit Abfall verbunden, was nicht unbeträchtliche Kosten verursacht.

Aus der US-PS 4 208 154 ist beispielsweise eine Bohrkrone bekannt, bei welcher die Segmente unter Verwendung einer Zwischenlage auf einen Hohlzylinderträger aufgesetzt sind. Zur Schaffung einer ausreichenden Verbindung zwischen Segmenten und Hohlzylinderträger haben Segment- bzw. Zwischenlage und Hohlzylinderträger einen speziell ausgebildeten Verbindungsbereich, welcher ein formschlüssiges Ineinandergreifen der Teile ermöglicht. Dadurch wird durch den Formschluss eine allfällig unzureichende Verbindung zwischen Segment und Hohlzylinderträger teilweise kompensiert. Dies wird allerdings nur mit einem erheblichen wirtschaftlichen Auwand erkauft, da sowohl Segmente bzw. Zwischenlagen als auch Hohlzylinderträger eine einen erhöhten Herstellungsaufwand erfordemden Formgebung unterzogen werden müssen.

Der Erfindung liegt die Aufgabe zugrunde, ein wirtschaftliches und rationelles Herstellverfahren diamantbestückter Bohrkronen in Ringsegmentausführung zu schaffen, wobei das Verfahren zusätzlich dazu dient, einen hohen Qualitätsstandard, insbesondere bezüglich Verbindung zwischen Segmenten und Hohlzylinderträger zu erzielen.

Erfindungsgemäss wird die Aufgabe dadurch gelöst, dass durch Sintem oder Sinterfügen ein Hohlzylinderkörper mit zwei äusseren Metallzonen und einer inneren diamantbestückten Zone zusammengefügt wird und mittels Laserschneiden durch einen mäanderförmig verlaufenden Trennschnitt in der inneren diamantbestückten Zone der Hohlzylinderkörper in zwei spiegelbildliche diamantbestückte Bohrkronen aufgeteilt wird.

Das erfindungsgemässe Verfahren schafft in einem Arbeitsgang nach abschliessendem Trennen mittels Laserschneiden zwei diamantbestückte Bohrkronen spiegelbildlicher Ausführungsform. Dadurch ist das Verfahren äusserst wirtschaftlich, da nicht gesondert auf einen Hohlzylinderträger einzelne Segmente aufgesetzt werden müssen. Zudem ist das Verfahren abfallfrei, insbesondere hinsichtlich der hochwertigen inneren diamantbestückten Zone, welche aus Matrixmaterial und Diamanten besteht.

Die Herstellung des Hohlzylinderkörpers mit den zwei Metallzonen und der inneren diamantbestückten Zone führt ausserdem dazu, dass die Verbindungsflächen zwischen den einzelnen Zonen optimal ausgenutzt werden. Dies führt zu einer ausserordentlich hohen Qualität hinsichtlich Verbindung zwischen den einzelnen Zonen. Darüber hinaus sind die Umfangskonturen optimal aufeinander abgestimmt und bedürfen nach abschliessender Herstellung der diamantbestückten Bohrkronen keiner gesonderten Bearbeitung.

Zur Erleichterung der Verbindung der entsprechend dem erfindungsgemässen Verfahren hergestellten diamantbestückten Bohrkronen mit einem zylindrischen Trägerkörper sind zweckmässigerweise die zwei äusseren Metallzonen an ihren freien Enden mit einer Anschlussform versehen, welche aus einer Zylinderfläche und einer zur freien Stirnfläche parallel verlaufenden Ringfläche besteht. Diese Ausgestaltung führt somit zu einem Bereich mit verjüngter Wandstärke, welche mit Vorteil durch Absetzen der Aussenkontur zustandekommt, so dass dieser eine verjüngte Wandstärke aufweisende Bereich in den insbesondere zylindrisch ausgebildeten Trägerkörper eingesetzt werden kann. Dank der abgesetzten Aussenkontur bildet sich kein Durchmessersprung an der Oberfläche, so dass bei Verwendung des dadurch komplettierten Diamantbohrwerkzeuges keine Behinderungen auftreten.

In an sich bekannter Weise erfolgt eine Fixierung der Verbindungsstelle zwischen Bohrkrone und Trägerkörper mittels Löten. Dadurch ist es möglich, im Falle eines Verschleisses der Segmente lediglich die Bohrkrone zu entfernen und den Trägerkörper unter Einlöten einer neuen Bohrkrone weiter zu verwenden.

Der mittels Laserschneiden hergestellte mäanderförmig verlaufende Trennschnitt durch die innere diamantbestückte Zone bildet ineinandergreifende Zähne. Damit entsteht an jeder Bohrkrone ein kronenartiges Profil mit in Umfangsrichtung versetzten und axial gegeneinanderweisenden ineinandergreifenden Zähnen. Jeder dieser Zähne kommt damit einem Segment der Bohrkrone gleich.

Eine optimale Ausnutzung der hochwertigen inneren diamantbestückten Zone wird dann erreicht, wenn in bevorzugter Weise die Krone der Zähne beider Bohrkronen entlang der Fügungszone zwischen innerer diamantbestückter Zone und äusseren Metallzonen der jeweils anderen Bohrkrone verlaufen. Durch diese Ausführungsform wird die gesamte innere diamantbestückte Zone zur Bildung der Höhe der Zähne ausgenutzt, was für die Lebensdauer der die Funktion von Segmenten übernehmenden Zähnen massgebend ist.

Sowohl aus der Sicht der Herstellung als auch aus der Sicht des Einsatzes ist es zweckmässig, wenn sich die Zähne in ihrem in Umfangsrichtung der Bohrkrone gemessenen Mass zum freien Ende hin leicht verjüngen, wobei die massgebenden Flanken der Zähne bevorzugt unter einem Winkel von 1° bis 25° zur Längsachse der Zähne geneigt sind.

Einerseits zur Verbesserung des Anbohrverhaltens sowie andererseits zur Verbesserung der Festigkeit der Zähne sind zweckmässigerweise gerundete Uebergänge vorgesehen und zwar mit Vorteil sowohl an der Krone als auch am Grund der Zähne. Dabei handelt es sich bei diesen Rundungen zweckmässigerweise um einen Radius, welcher sich in der Grösse zwischen 1 und 2,5 mm bewegt. Die Erzeugung der diesbezüglichen Rundungen kann in einfacher Weise beim Heraustrennen mittels Laserschneiden durch entsprechende Lenkung des Laserstrahls erfolgen.

Die Erfindung wird nachstehend in beispielhafter Form, anhand von Zeichnungen, näher erläutert. Es zeigen:
- Fig. 1: einen kompletten Hohlzylinderkörper nach dem Sintervorgang und Anpassung der Anschlussform im Schnitt;
- Fig. 2: zwei aus dem Hohlzylinderkörper entsprechend Fig. 1 gebildete spiegelbildliche Bohrkronen.

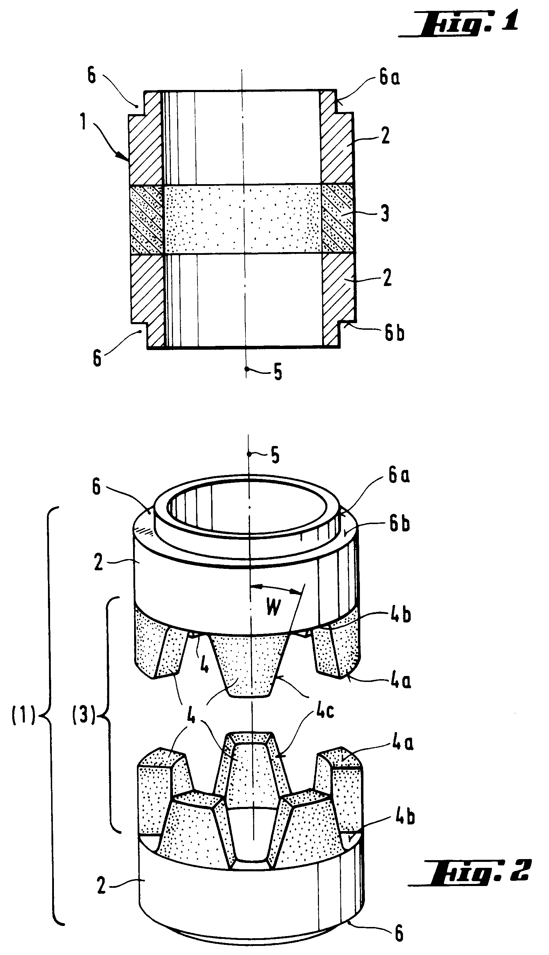

Fig. 1 zeigt einen Hohlzylinderkörper 1, welcher aus zwei äusseren Metallzonen 2 und einer inneren diamantbestückten Zone 3 besteht, die mittels Sintem zusammengefügt worden sind. Darüber hinaus zeigt die Fig. 1, dass der Hohlzylinderkörper 1 bereits eine mechanische Bearbeitung erfahren hat, indem an den beiden äusseren Metallzonen 2 eine Anschlussform 6 angedreht worden ist, welche aus einer von der Umfangskontur zurückversetzten Zylinderfläche 6a und einer zur freien Stirnfläche parallel verlaufenden Ringfläche 6b besteht. Dadurch ist eine Abstufung an der Umfangskontur der äusseren Metallzonen 2 entstanden, so dass ein stufenloser Anschluss an einen zeichnerisch hier nicht dargestellten, beispielsweise ebenfalls hohlzylindrisch ausgebildeten Trägerkörper erfolgen kann.

Die Fig. 2 zeigt die Unterteilung des Hohlzylinderkörpers 1 in zwei Bohrkronen. Diese Unterteilung ist dadurch zustande gekommen, dass mittels Laserschneiden in der inneren diamantbestückten Zone 3 ein mäanderförmig verlaufender Trennschnitt hergestellt worden ist, so dass die verbleibenden Bereiche der inneren diamantbestückten Zone 3 ineinandergreifende Zähne 4 bilden. Wie die Fig. 2 ferner verdeutlicht, erstreckt sich die Höhe der Zähne 4 über die gesamte Axialerstreckung der inneren diamantbestückten Zone 3, was zur Folge hat, dass der zwischen den einzelnen Zähnen 4 liegende Grund 4b bei beiden Bohrkronen von der jeweils äusseren Metallzone 2 gebildet wird. Die Zähne 4 verjüngen sich zu der vom freien Ende gebildeten Krone 4a hin, wobei die jeweiligen Flanken 4c unter einem Winkel welcher 1° bis 25° betragen kann, zur Längsachse 5 der Zähne 4 hin geneigt sind.

## Patentansprüche

1. Verfahren zur Herstellung hohlzylinderförmiger, eine Metallzone (2) und eine diamantbestückte Zone (3) aufweisender Bohrkronen für Diamantbohrwerkzeuge, wobei die Metallzone (2) am freien Ende eine Anschlussform (6), bestehend aus einer Zylinderfläche (6a) und einer zu der freien Stimfläche parallel laufenden Ringfläche (6b) aufweist, **dadurch gekennzeichnet**, dass durch Sintem oder Sinterfügen ein Hohlzylinderkörper (1) mit zwei äusseren Metallzonen (2) und einer inneren diamantbestückten Zone (3) zusammengefügt wird und mittels Laserschneiden durch einen mäanderförmig verlaufenden Trennschnitt in der inneren diamantbestückten Zone (3) der Hohlzylinderkörper (1) in zwei spiegelbildliche diamantbestückte Bohrkronen aufgeteilt wird.

2. Verfahren nach Anspruch 1, dadurch gekennzeichnet, dass der mäanderförmig verlaufende Trennschnitt durch die innere diamantbestückte Zone (3) ineinander greifende Zähne (4) bildet.

3. Verfahren nach Anspruch 1 oder 2, dadurch gekennzeichnet, dass die Krone (4) der Zähne (4) beider Bohrkronen entlang der Fügungszone zwischen innerer diamantbestückter Zone (3) und äusseren Metallzonen (2) der jeweils anderen Bohrkrone verläuft.

4. Verfahren nach Anspruch 2 oder 3, dadurch gekennzeichnet, dass sich die Zähne (4) zum freien Ende hin in ihrer in Umfangsrichtung der Bohrkrone verlaufenden Erstreckung verjüngen und die jeweiligen Flanken (4c) unter einem Winkel (W) um 1° bis 25° zur Längsachse der Zähne (5) geneigt sind.

5. Verfahren nach einem der Ansprüche 2 bis 4, dadurch gekennzeichnet, dass die Zähne (4) an ihren Uebergängen zum Grund (4b) hin und zur Krone (4a) hin gerundet sind.

## Claims

1. Process for manufacturing hollow-cylindrical core bits for diamond drilling tools, comprising a diamond studded zone (3), and the metal zone (2) comprises at the free end a connecting shape (6) consisting of a cylinder surface (6a) and an annular surface (6b) which extends parallel to the free end surface, **characterized in that** a hollow cylinder element (1) is joined with two outer metal zones (2) and an inner diamond studded zone (3) by way of sintering or sinter-joining, and the hollow cylinder element (1) is divided by a meandering separating cut in the inner diamond studded zone (3) into two mirror-imaged diamond studded core bits by way of laser cutting.

2. Process according to Claim 1, **characterized in that** the meandering separating cut through the inner diamond studded zone (3) forms mashing teeth (4).

3. Process according to Claim 1 or 2, **characterized in that** the crown (4) of the teeth (4) of both core bits extends along the joining zone between inner diamond studded zone (3) and outer metal zones (2) of the respective other core bit.

4. Process according to Claim 2 or 3, **characterized in that** the teeth (4) narrow towards the free end of their extent in the peripheral direction of the core bit, and the respective flanks (4c) are slanted at an angle (W) between 1° and 25° relative to the longitudinal axis of the teeth (5).

5. Process according to one of Claims 2 to 4, **characterized in that** the teeth (4) are rounded in their transitions towards the ground (4b) and towards the bit (4a).

## Revendications

1. Procédé de fabrication de couronnes de fleurets cylindriques creuses pour outils de perçage à diamants, présentant une zone métallique (2) et une zone diamantée (3), la zone métallique (2) présentant à l'extrémité libre une forme de raccordement (6) constituée par une surface cylindrique (6a) et une surface annulaire (6b) orientée parallèlement à la surface frontale libre, **caractérisé en ce** qu'un corps cylindrique creux (1) avec deux zones métalliques (2) extérieures et une zone diamantée (3) intérieure est assemblé par frittage ou sintérisation, et que le corps cylindrique creux (1) est divisé par découpage à laser suivant une coupe cisaillée en forme de méandres dans la zone diamantée (3) intérieure, en deux couronnes de fleurets diamantées en image de miroir.

2. Procédé selon la revendication 1, caractérisé en ce que la coupe cisaillée en forme de méandres dans la zone diamantée (3) intérieure forme des dents (4) s'engrenant les unes dans les autres.

3. Procédé selon la revendication 1 ou 2, caractérisé en ce que la couronne (4) des dents (4) des deux couronnes de fleurets s'étend le long de la zone de joint entre la zone diamantée (3) intérieure et les zones métalliques (2) extérieures de l'autre couronne de fleuret respective.

4. Procédé selon la revendication 2 ou 3, caractérisé en ce que les dents (4) se rétrécissent en direction de l'extrémité libre dans le sens de leur extension dans la direction circonférentielle de la couronne de fleuret et que les flancs respectifs (4c) sont inclinés sous un angle (W) de 1° à 25° par rapport à l'axe longitudinal (5) des dents.

5. Procédé selon l'une des revendications 2 à 4, caractérisé en ce que les dents (4) sont arrondies à leurs transitions en direction du fond (4b) et de la couronne (4a).
